Europäisches Patentamt

(19) European Patent Office

Office européen des brevets

(11) Numéro de publication: **0 107 596**
**B1**

(12) **FASCICULE DE BREVET EUROPEEN**

(45) Date de publication du fascicule du brevet: **08.08.90**

(51) Int. Cl.⁵: **G 01 S 1/68**

(21) Numéro de dépôt: **83402079.4**

(22) Date de dépôt: **25.10.83**

(54) **Balise de détresse pour naufrage.**

(30) Priorité: **25.10.82 FR 8217774**

(43) Date de publication de la demande:
**02.05.84 Bulletin 84/18**

(45) Mention de la délivrance du brevet:
**08.08.90 Bulletin 90/32**

(84) Etats contractants désignés:
**BE CH DE FR GB IT LI LU NL SE**

(56) Documents cités:
**GB-A-1 060 173**
**US-A-3 617 894**
**US-A-3 665 315**
**US-A-3 870 959**
**US-A-4 101 894**

(73) Titulaire: **Société d'Etudes, de Recherches, de Travaux d'Organisation et de Gestion S.E.R.T.O.G.**
**53 boulevard Victor-Hugo**
**F-92200 Neuilly sur Seine (FR)**

(72) Inventeur: **Piacenza, Francis**
**25 rue Emile Bernard**
**F-35100 Rennes (FR)**

(74) Mandataire: **Pinguet, André**
**Cabinet de Proprieté Industrielle CAPRI 28 bis, avenue Mozart**
**F-75016 Paris (FR)**

Courier Press, Leamington Spa, England.

**Description**

La présente invention concerne les balises de détresse pour naufragés, c'est-à-dire les instruments du type "émetteur de radiolocalisation", permettant de localiser au moyen d'un récepteur approprié leur porteur. On connaît déjà de nombreux types "émetteurs de radiolocalisation" fonctionnant sur les fréquences de détresse aviation.

Ces fréquences, 121,5 Megahertz et 243 MHz, sont des fréquences aéronautiques d'urgence et même les stations du service mobile maritime peuvent communiquer sur celles-ci à des fins de sécurité avec les stations du service mobile aéronautique.

Ces émetteurs de radiolocalisation peuvent être fixes ou portatifs, de forte ou de faible puissance. Dans le cas d'ensembles portatifs, ceux-ci permettent, grâce à l'écoute permanente effectuée par les services aéronautiques dotés de récepteurs professionnels et performants, de rechercher, repérer et porter secours à un naufragé seul en mer. Depuis quelques années, la répartition de fréquences a été organisée de façon à attribuer dans la bande VHF ou métrique, le spectre de fréquences de 156,025 MHz à 162,025 MHz pour le trafic côtier.

Celui-ci connaît un essor considérable et de nombreux navires, voiliers, chalutiers ainsi que de nombreux centres d'écoute et de surveillance du service mobile maritime sont dotés d'émetteurs récepteurs VHF.

Ces appareils comportent la faculté technique d'assurer une double veille sur le canal ce son choix et sur le canal 16. Ce canal 16 de fréquence 156,800 MHz est devenu fréquence, internationale utilisée pour la détresse, la sécurité et l'appel par le service mobile maritime (UER: Union Européenne de Radiodiffusion).

Aucune disposition de règlement concernant les dispositions générales en matière de communications de détresse et de sécurité ne peut faire obstacle à l'emploi par une station mobile ou terrestre, de navire en détresse, de tous les moyens dont elle dispose pour attirer l'attention, signaler sa situation et obtenir du secours (Art. 38 de l'UER).

L'invention qui va être décrite dans les pages suivantes concerne les types de "émetteurs de radiolocalisation".

Elle se situe dans la gamme de radiobalises de faible puissance. Celles qui existent sur le marché sont uniquement sur les fréquences de détresse aviation. La détection et le repérage d'un naufragé seul en mer ne peuvent être effectués que par l'aviation seule et n'obtiennent leur maximum d'efficacité qu'au grand large.

Le nombre de plaisanciers naufragés à proximité ou au large des côtes, restant trop souvent seuls très longtemps avant d'être repérés et secourus par un bateau de passage, augmente continuellement. L'invention suivante permet de pallier cet inconvénient par l'émission d'une troisième fréquence de détresse ou d'urgence, c'est-à-dire l'information nécessaire pour une détection rapide, à proximité ou au large, d'un naufragé seul en mer par les services maritimes ou tout navire dans un rayon d'éloignement déterminé. Elle permet aussi de conserver les possibilités offertes par l'aéronautique.

Il est connu par le brevet US 4 101 894 une balise de détresse du type émetteur de radiolocalisation comportant une alimentation, un organe de commutation et modulations, un émetteur en modulation de fréquence et une antenne. L'organe de commutation et modulation est agencé pour commander les émissions en alternance avec une période de silence entre chaque émission. Ils est connu par le brevet US 3 665 315 dans une application similaire, un émetteur de détresse opérant en modulation d'amplitude délivrant simultanément des signaux de 121,5 et 243 MHz.

La présente invention a pour objet une balise de détresse du type émetteur de radiolocalisation comportant une alimentation, un organe de commutation et modulations, un émetteur en modulation d'amplitude, un émetteur en modulation de fréquence et une antenne, l'organe de commutation et modulations étant agencé pour commander les émissions des émetteurs en alternance de préférence, avec une période de silence entre chaque émission, l'antenne étant une antenne en quart d'onde raccourcie dont la fréquence d'accord est centrale, c'est-à-dire sensiblement égale à la fréquence équidistante de la fréquence FM et de la fréquence de base AM, et chaque circuit des étages de puissance présentant réciproquement, par leurs circuits accordés, une désadaptation totale pour l'autre fréquence de façon que lors du fonctionnement alternatif des émetteurs, la puissance de sortie choisisse le chemin le mieux adapté, celui de l'antenne.

D'autres caractéristiques de l'invention apparaîtront au cours de la description qui va suivre, donnée à titre d'exemple non limitatif en regard des dessins ci-joints, et qui fera bien comprendre comment l'invention peut être réalisée.

Sur les dessins;

—la figure 1 est un schéma de principe de l'organisation générale de la balise selon l'invention;

—la figure 2 est un exemple de diagramme de fonctionnement;

—la figure 3 est un schéma de l'organe de commutation et modulations; et

—la figure 4 est un schéma de deux émetteurs couplés.

Cette radiobalise est du type trifréquences dont les deux fréquences aéronautiques 121,500 MHz et 245 MHz sont émises simultanément.

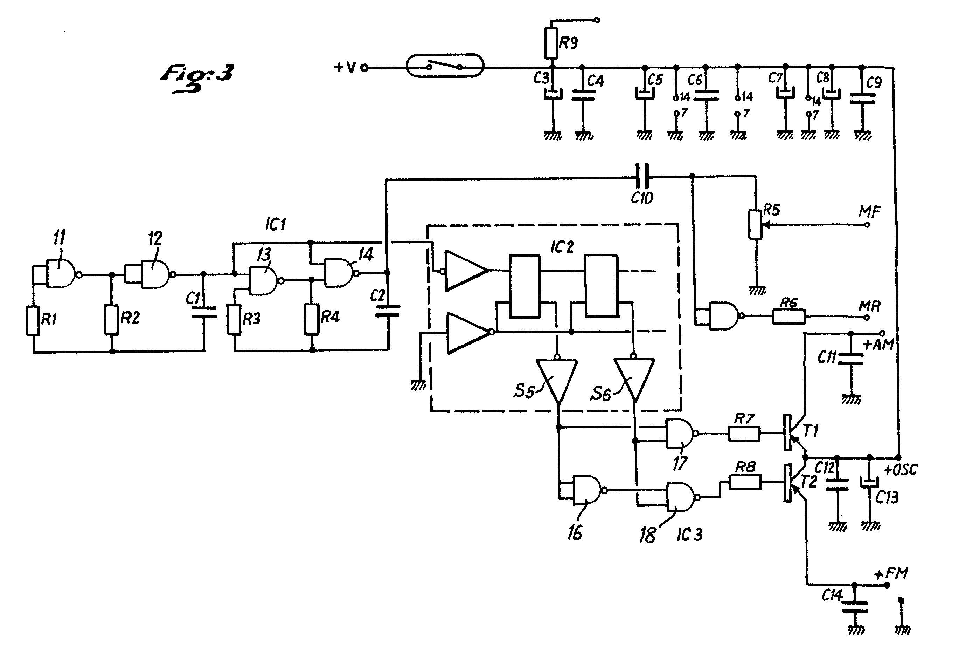

La troisième fréquence de 156,800 MHz est commutée alternativement avec les deux premières suivant un cycle qui peut être par exemple de 5 secondes (voir figure 2). Une période d'émission est suivie de préférence d'une période de silence pour économiser la batterie. Les périodes peuvent être égales; chaque émetteur émet de façon continue pendant une sur deux des périodes d'émission. Chaque émetteur utilise pour sa modulation un signal acoustique de 1300 hz découpé pour obtenir un rapport égal ou supérieur à au moins 1/2 (convention Union Européenne de Radiodiffusion).

Cette radiobalise trifréquences comporte deux modes de modulation. L'émetteur de radiolocalisation de fréquence de détresse aviation est modulé en amplitude, la deuxième fréquence de 243 MHz étant l'harmonique 2 du 121,5 MHz que l'on favorise par l'effet de non linéarité de l'étage de sortie. L'émetteur de radiolocalisation de fréquence 156,800 MHz est lui modulé en fréquence.

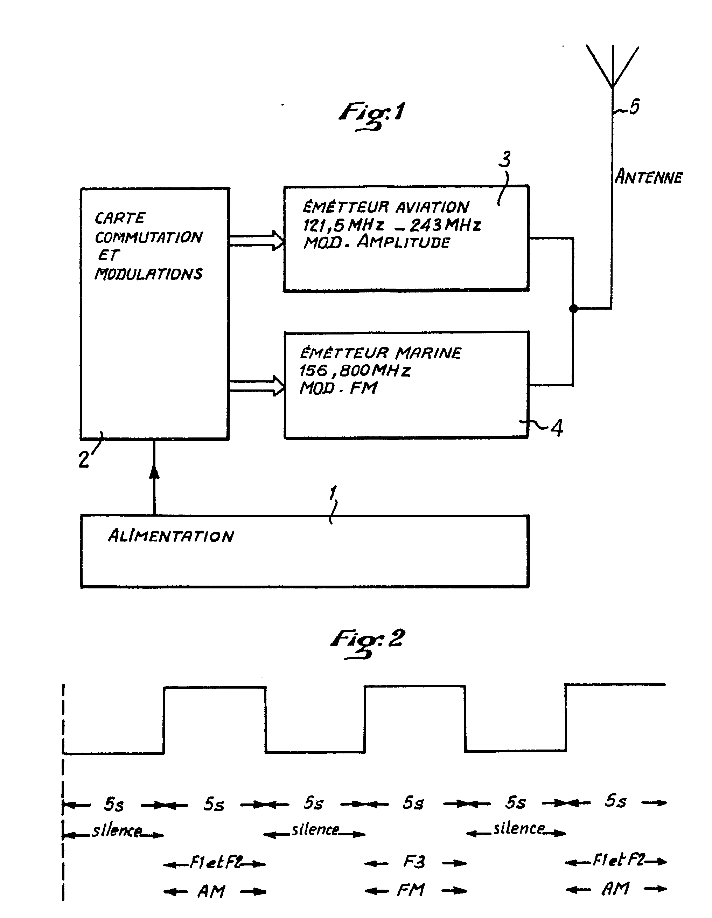

L'ensemble portatif est étanche et flottable et est lesté de façon à maintenir l'antenne hors de l'eau. Il comporte donc deux émetteurs commutés alternativement et modulés en amplitude ou en fréquence selon le schéma de la figure 1 et le diagramme de la figure 2.

L'appareil comporte une alimentation 1 débitant sur une carte de commutation et modulations 2 commandant l'émetteur aviation 3, fonctionnant en modulation d'amplitude sur les fréquences 121,5 MHz et 243 MHz et l'émetteur marine 4 fonctionnant en modulation d'amplitude sur la fréquence 156,8 MHz. Les deux émetteurs sont couplés à l'antenne unique 5.

Le diagramme de la figure 2 illustre un exemple de fonctionnement de l'appareil. Des périodes de silence de cinq secondes sont séparées par des périodes d'émission de cinq secondes. Ces périodes sont choisies égales, mais peuvent être différentes. En particulier, les périodes d'émission peuvent être plus espacées quand la charge de la batterie diminue, pour prolonger la durée utile de fonctionnement de l'appareil. A l'inverse, la période de silence peut être plus courte, ou même nulle. L'importance de la période d'émission favorise la localisation. L'organe de commutation et modulations 2 peut comporter à cet effet des moyens de commutation sensibles à la charge résiduelle de l'alimentation (c'est-à-dire un détecteur de seuils de tension et un circuit de commande approprié).

Pendant une période d'émission sur deux, c'est l'émetteur aviation qui fonctionne, et pendant l'autre période, c'est l'émetteur marine.

F1=121,500 MHz Fondamental Modulé
en amplitude
F2=243,000 MHz Harmonique Modulé
en amplitude
F3=156,800 MHz Fondamental Modulé
en Fréquence

La puissance de l'émetteur FM est supérieure à celle de l'émetteur AM, les systèmes de repérage et de détection des services maritimes étant terrestres, alors que le repérage par l'aéronautique s'effectue en altitude.

Cette particularité tend à compenser les différences de propagation à vue et rasante: pas d'obstacle vers le ciel.

Le découpage et la modulation des deux émetteurs sont effectués par un minimum de composants électroniques pour des raisons de fiabilité et de consommation. Les oscillateurs de base et la modulation restent en fonctionnement permanent lors de la mise en route de la balise pour des raisons de stabilité en fréquence.

La figure 3 représente plus en détails la composition de la carte modulation et découpage.

Un seul circuit intégré IC1 en est la maître pilote, ses deux premières portes NON-ET 11, 12 sont montées en multivibrateur et fournissent un signal carré de fréquence

$$F=\frac{1}{2,2\ R2\ C1}.$$

Ce signal carré de rapport égal ou supérieur à l'unité commande le déclenchement du multivibrateur de fréquence acoustique constitué par les deux autres portes 13, 14 du même circuit et un compteur à sept étages IC2, dont deux seulement sont représentés.

L'avantage de ce compteur permet par le choix de ses sorties associées deux à deux de pouvoir faire varier les alternances de fonctionnement de d'arrêt des émetteurs. Dans le cas représenté, les sorties S5 et S6 d'IC2 commandent un groupe de trois portes NON-ET 16, 17, 18 afin de réaliser l'alternance décrite dans le diagramme 2. Les deux portes 17, 18 attaquent les transistors de commutation (T1 et T2, figure 3) des alimentations des émetteurs, et permettent d'intervertir le choix des émissions qui reste toujours lié à celui du découpage de la modulation. En choisissant deux autres portes voisines, on pourra avoir des temps d'émission différents, mais égaux aux temps de silence. Par un choix judicieux de portes non voisines, on peut varier les temps d'émission par rapport aux temps de silence. Ce choix peut être fait par un circuit commandé par un détecteur de seuils de tension.

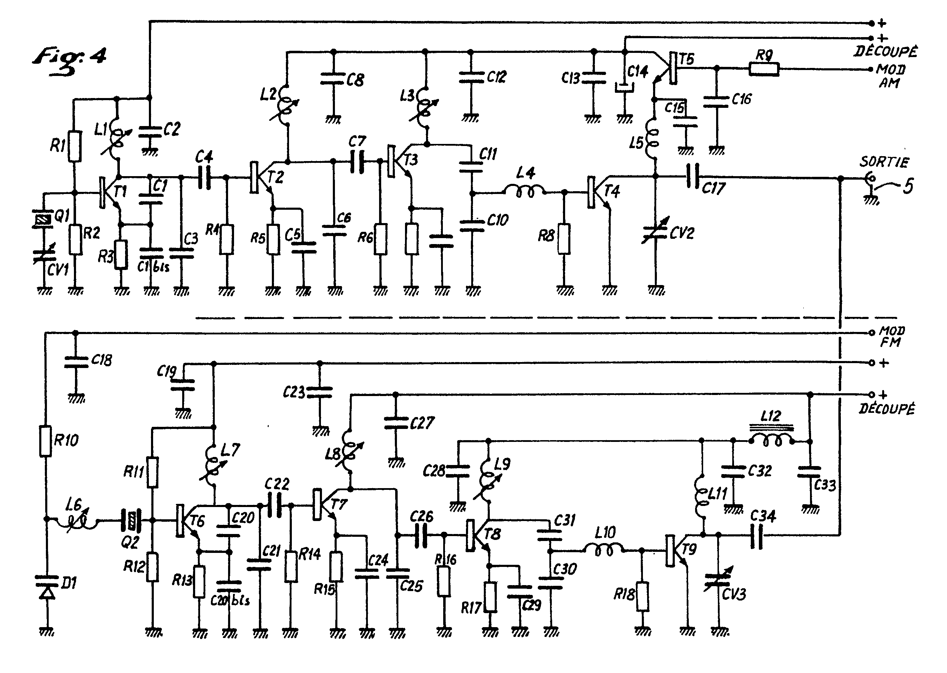

La réalisation électronique comporte deux ensembles émetteurs séparés (voir figure 4). Ceux-ci sont de conception classique: un étage oscillateur à quartz (Q1 ou Q2) suivi d'un étage doubleur, puis un étage tampon amplificateur qui précède l'étage final de puissance.

Dans le mode FM, l'étage oscillateur à quartz est modulé par le signal acoustique appliqué à une diode varicap D1 associée à une self série L6 afin d'augmenter l'excursion en fréquence. Dans le mode AM, c'est l'étage final qui est modulé par l'utilisation d'un modulateur série constitué d'un transistor T5.

Les deux transistors finaux T4 et T9 des deux émetteurs sont accordés dans leurs collecteurs par les circuits L5, C V2 et L11, C V3 sur leurs fréquences respectives (figure 3). Ils sont fortement couplés par les capacités C 17 et C 34 à une seule antenne 5 en quart d'onde raccourcie (spiralée) dont la fréquence d'accord est centrale, c'est-à-dire une fréquence aussi proche que possible de la fréquence équidistante de 121,5 et 156,8 soit 139,15.

L'adaptation de celle-ci n'est pas optimum pour chacune des fréquences et permet d'obtenir une large bande passante; l'antenne présente pour les fréquences respectives de 121,5 MHz et 156,8 MHz la même désadaptation mais se comporte réellement comme une antenne.

Chaque circuit accordé des étages de puissance présente réciproquement lors du fonctionnement alternatif des émetteurs, une désadaptation totale pour l'autre fréquence au moyen de leurs circuits accordés. La puissance de sortie de chaque ensemble choisit le chemin le mieux adapté; celui de l'antenne.

Le maximum de rayonnement dans ce type de fonctionnement est ainsi obtenu de manière simple, sans commutation d'antenne ou de sortie et élimine tous les systèmes mécaniques, tels que relais électroniques ou diode pin de puissance.

Cette conception entraîne une perte de puissance rayonnée, mais la réalisation est plus faible, moins complexe, moins encombrante et ces avantages sont importants pour un système portatif utilisé en cas de détresse dans des conditions difficiles.

Il est possible de réaliser une balise conforme à l'invention avec un nombre d'émetteurs plus grand. Ainsi, il est possible d'incorporer dans la balise, selon l'invention, un émetteur à modulation d'amplitude fonctionnant sur la longueur d'onde des satellites, géostationnaires ou non. L'émission étant verticale, elle sera reçue plus directement et plus facilement. Eventuellement, cet émetteur supplémentaire, d'une fréquence de l'ordre de 400 MHz pourra avoir son antenne propre de 10 à 15 cm de long. Les différents émetteurs fonctionnent à tour de rôle, pilotés par la carte commutation et modulations, pour disposer, chacun à son tour, de la puissance maxima disponible. Certaines fréquences peuvent être émises plus souvent que les autres. Le cas échéant, la balise pourra comporter un commutateur satellite-aviation; la position initiale étant par exemple satellite, le naufragé commutant sur aviation s'il aperçoit un avion.

L'oscillateur à quartz pourrait être remplacé par un synthétiseur de fréquence, que la carte de commutation piloterait afin d'obtenir les différentes fréquences de détresse, existantes ou à venir.

Il va de soi que le mode de réalisation décrit n'est qu'un exemple et qu'il serait possible de le modifier, notamment par substitution d'équivalents techniques, sand sortir pour cela de cadre de l'invention.

**Revendications**

1. Balise de détresse du type émetteur de radiolocalisation comportant une alimentation (1), un organe de commutation et modulations (2), un émetteur (3) en modulation d'amplitude, un émetteur (4) en modulation de fréquence et une antenne (5), l'organe (2) de commutation et modulations étant agencé pour commander les émissions des émetteurs (3, 4) en alternance de préférence, avec une période de silence entre chaque émission, l'antenne (5) étant une antenne en quart d'onde raccourcie dont la fréquence d'accord est centrale, c'est-à-dire sensiblement égale à la fréquence équidistante de la fréquence FM et de la fréquence de base AM, et chaque circuit des étages de puissance présentant réciproquement, par leurs circuits accordés, une désadaptation totale pour l'autre fréquence de façon que lors du fonctionnement alternatif des émetteurs, la puissance de sortie choisisse le chemin le mieux adapté, celui de l'antenne.

2. Balise selon la revendication 1, caractérisée en ce qu'elle comporte en outre un deuxième émetteur en modulation d'amplitude, le cas échéant associé à une antenne propre, les différents émetteurs ne fonctionnant pas ensemble.

**Patentansprüche**

1. Notfunkbake von der Art Funkortungssender mit einer Stromversorgung (1), einen Schalt- und Modulationsorgan (2), einem AM-Sender (3), einem FM-Sender (4) und einer Antenne (5), wobei das Schalt- und Modulationsorgan (2) so aufgebaut ist, daß es die Aussendungen der Sender (3, 4) vorzugsweise abwechselnd steuert, mit einer Stilleperiode zwischen jeder Aussendung, wobei die Antenne (5) eine gekürzte Viertelwellenantenne ist, deren Abstimmungsfrequenz zentral ist, d.h., im wesentlichen gleich der von der Frequenz FM und der Basisfrequenz AM gleich weit entfernten Frequenz, und wobei jeder Kreis der Leistungsstufen gegenseitig durch ihre abgestimmten Kreise eine völlige Fehlanpassung für die andere Frequenz aufweist,, so daß im abwechselnden Betrieb der Sender die Ausgangsleistung den am besten geeigneten Weg, d.h. den der Antenne, wählt.

2. Bake nach Anspruch 1, dadurch gekennzeichnet, daß sie weiter einen zweiten AM-Sender aufweist, der gegebenenfalls einer eigenen Antenne zugeordnet ist, wobei die verschiedenen Sender nicht gemeinsam arbeiten.

**Claims**

1. Distress beacon of the radio location transmitter type comprising a power supply (1), a switching and modulating member (2), an amplitude modulation transmitter (3), a frequency modulation transmitter (4), and an antenna (5), the switching and modulating member (2) being arranged to control the transmissions of the transmitters (3, 4) to alternate, preferably with a period of silence between each transmission, the antenna being a shortened quarter-wave antenna whose tuned frequency is central, i.e. is substantially equal to the frequency equidistant from the FM frequency and the AM fundamental frequency, and conversely each of the power stage circuits, by virtue of their tuned circuits, being a total mismatch for the other frequency so that, when the transmitters are operating alternately, the output power selects the path which is best matched, that along the antenna.

2. Beacon according to claim 1, characterised in that it also comprises a second amplitude modulation transmitter, associated if need be with an antenna of its own, the different transmitters not operating together.

EP  0 107 596  B1

## Fig:1

CARTE
COMMUTATION
ET
MODULATIONS

ÉMÉTTEUR AVIATION
121,5 MHz _ 243 MHz
MOD. AMPLITUDE

ÉMÉTTEUR MARINE
156,800 MHz
MOD. FM

ALIMENTATION

ANTENNE

## Fig:2

5s — 5s — 5s — 5s — 5s — 5s

silence — silence — silence

F1 et F2 — F3 — F1 et F2

AM — FM — AM

Fig:3

EP 0 107 596 B1

Fig. 4

EP 0 107 596 B1